# DEMANDE DE BREVET EUROPEEN

(11) **EP 4 207 439 A1**
(43) Date de publication de la demande: **05.07.2023**
(21) Numéro de dépôt: 21306949.5
(22) Date de dépôt: 29.12.2021
(51) Int. Cl.: H01M 50/103, H01M 50/503, H01M 50/505, H01M 50/517, H01M 50/588

(54) **DISPOSITIF D'INTERCONNEXION, ENSEMBLE ET PROCÉDÉ D'INTERCONNEXION ASSOCIÉS**

(71) Demandeur: Automotive Cells Company SE, 92300 Levallois Perret (FR)
(72) Inventeur: DE ROLAND, Geoffroy, 33520 BRUGES (FR); QUEYRENS, Mathieu, 33910 SAINT-DENIS-DE-PILE (FR); CHAUVEAU, Pierre, 33520 BRUGES (FR); LAATIAOUI, Najib, 33130 BEGLES (FR)
(74) Mandataire: Lavoix

(57) **Abrégé**

L'invention concerne un dispositif d'interconnexion (16) de deux cellules électrochimiques (12, 14) de véhicule électrique comprenant une borne de connexion (20, 22) électrique, le dispositif d'interconnexion étant configurable entre une configuration de raccordement dans laquelle il raccorde électriquement et mécaniquement lesdites deux bornes et une configuration de repos dans laquelle il est à l'écart desdites bornes, le dispositif d'interconnexion comprenant un corps (30) et deux parties de raccordement (32, 34) configurées pour être emboîtées selon une direction d'emboîtement (dE), respectivement, sur l'une des deux bornes desdites deux cellules, dite « borne associée », lors du passage de la configuration de repos dans la configuration de raccordement, chaque partie de raccordement comprenant un système de fixation (42) solidaire du corps, configuré pour être encliqueté sur des bords latéraux de fixation (26) de la borne associée lorsque ladite partie de raccordement est emboîtée sur la borne associée dans la configuration de raccordement.

## Description

La présente invention concerne un dispositif d'interconnexion d'au moins deux cellules électrochimiques de véhicule électrique.

L'invention concerne aussi un ensemble comprenant le dispositif d'interconnexion.

L'invention concerne aussi un procédé d'interconnexion d'au moins deux cellules électrochimiques.

L'invention s'applique en particulier à la réalisation d'une batterie, notamment de véhicule électrique. On entend par « batterie » une pluralité de cellules électrochimiques reliées électriquement les unes aux autres. Selon un exemple particulier de batterie, la pluralité de cellules électrochimiques est agencée sous la forme d'un ou plusieurs module(s), chaque module comprenant plusieurs cellules électrochimiques raccordées électriquement les unes aux autres et assemblées mécaniquement les unes aux autres par un système d'assemblage, tel que des plaques d'assemblage. Une cellule électrochimique comprend, en particulier, un empilement d'électrodes positives reliées les unes aux autres et un empilement d'électrodes négatives reliées les unes aux autres, séparées par un séparateur, connus sous le terme « stack ».

Un dispositif d'interconnexion connu comprend au moins deux parties de raccordement électrique, chacune des parties étant destinée à être raccordée respectivement à l'une des deux bornes de connexion électrique des deux cellules électrochimiques.

Pour assurer le raccordement mécanique du dispositif d'interconnexion aux bornes de connexion de deux cellules électrochimiques, il est connu de souder le dispositif d'interconnexion aux cellules, par exemples sur les bornes des cellules électrochimiques.

Toutefois, l'assemblage par soudure nécessite des équipements relativement coûteux et un contrôle de l'atmosphère autour de la zone de soudure. L'assemblage par soudure génère aussi un point chaud autour de la zone de soudure et des projections solides et gazeuses. En pratique, le dispositif d'interconnexion selon l'état de la technique est soudé en amont aux cellules électrochimiques avant la livraison à son futur utilisateur, par exemple un constructeur automobile. Le démontage du dispositif d'interconnexion connu est donc complexe et fastidieux. Le dispositif d'interconnexion selon l'état de la technique ne permet pas non plus son démontage non destructif des cellules électrochimiques, ce démontage endommageant les éléments sur lesquels le dispositif d'interconnexion était soudé.

Un but de l'invention est donc de palier les inconvénients précités en proposant un dispositif d'interconnexion permettant un montage facilité du dispositif d'interconnexion sur les cellules électrochimiques et permettant un démontage facilité du dispositif d'interconnexion des cellules électrochimiques.

A cet effet, l'invention concerne un dispositif d'interconnexion d'au moins deux cellules électrochimiques de véhicule électrique, chacune des deux cellules électrochimiques comprenant au moins une borne de connexion électrique comprenant une face supérieure et des bords latéraux de fixation, le dispositif d'interconnexion étant configuré pour raccorder entre elles électriquement et mécaniquement lesdites deux bornes de connexion des deux cellules électrochimiques,
le dispositif d'interconnexion étant configurable entre une configuration de raccordement dans laquelle il raccorde électriquement et mécaniquement entre elles les deux bornes de connexion des deux cellules électrochimiques et une configuration de repos dans laquelle il est à l'écart des bornes de connexion,
le dispositif d'interconnexion comprenant un corps et au moins deux parties de raccordement configurées pour être emboîtées selon une direction d'emboîtement, respectivement, sur l'une des deux bornes de connexion des deux cellules électrochimiques, dite « borne de connexion associée », lors du passage de la configuration de repos dans la configuration de raccordement,
chacune des deux parties de raccordement comprenant un système de fixation solidaire du corps, configuré pour être encliqueté sur les bords latéraux de fixation de la borne de connexion associée lorsque ladite partie de raccordement est emboîtée sur la borne de connexion associée dans la configuration de raccordement.

Il est entendu par « dispositif de fixation configuré pour être encliqueté sur les bords latéraux de fixation » que le dispositif de fixation est configuré pour être emboîté sur les bords latéraux de fixation par déformation élastique du dispositif de fixation.

Selon l'invention, il suffit d'emboîter chaque partie de raccordement sur la borne de connexion associée selon la direction d'emboîtement pour raccorder électriquement et mécaniquement le dispositif d'interconnexion aux bornes de connexion des cellules électrochimiques.

En outre, le dispositif de fixation permet de verrouiller l'emboîtement de chaque partie de raccordement sur la borne de connexion associée.

Ainsi, le dispositif d'interconnexion selon l'invention est plus facilement monté et verrouillé sur les bornes des cellules électrochimiques par rapport aux dispositifs d'interconnexion connus de l'état de la technique.

En outre, pour démonter le dispositif d'interconnexion, il suffit de libérer les bords de fixation des bornes de connexion des dispositifs de fixation associés en désengageant le dispositif de fixation des bornes. Un tel désengagement permet, en outre, de ne pas endommager les bornes de connexion.

Ainsi, le dispositif d'interconnexion selon l'invention est plus facilement démonté des bornes des cellules électrochimiques par rapport aux solutions de l'état de la technique.

En outre, on comprend par « le dispositif d'interconnexion est configurable entre une configuration de raccordement et une configuration de repos » que le dispositif d'interconnexion selon l'invention est configurable depuis la configuration de repos dans la configuration de raccordement et *vice versa.* En particulier, le dispositif d'interconnexion est démontable des bornes des cellules électrochimiques une fois qu'il est dans la configuration de raccordement.

Suivant un mode de réalisation particulier, le corps présente au moins une face arrière destinée à être orientée vers les deux cellules électrochimiques dans la configuration de raccordement, chacune des deux parties de raccordement comprenant, en outre, une pluralité de lames flexibles électriquement conductrices, chaque lame de la pluralité de lames faisant saillie de la face arrière du corps et étant configurée pour être agencée en appui selon la direction d'emboîtement contre au moins une zone d'appui correspondante de la face supérieure de la borne de connexion associée dans la configuration de raccordement de l'organe d'interconnexion, chaque pluralité de lames étant distincte de chaque système de fixation.

Chaque partie de raccordement est raccordée électriquement à la borne de connexion associée notamment via la pluralité de lames de cette partie de raccordement. En outre, du fait que les lames de la pluralité de lames sont flexibles, les lames sont aptes à être compressées entre la zone d'appui correspondante de la borne de connexion associée et la face arrière du corps. Une telle compression permet d'assurer un contact électrique optimal entre le dispositif d'interconnexion et les bornes associées. Ainsi, le dispositif d'interconnexion selon l'invention permet un raccordement électrique fiable des deux cellules électrochimiques.

En outre, les lames de la pluralité de lames permettent d'augmenter la surface de contact avec la borne associée pour améliorer la tenue mécanique et la transmission de l'énergie électrique.

Suivant un mode de réalisation, pour chaque pluralité de lames, chaque lame de cette pluralité de lames est déplaçable entre une position déployée lorsque le dispositif d'interconnexion est dans la configuration de repos et une position rétractée distincte de la position déployée lorsque le dispositif d'interconnexion est dans la configuration de raccordement, chaque lame de cette pluralité de lames étant configurée pour être rétractée vers la face arrière du corps dans sa position rétractée par rapport à sa position dans la position déployée et, chaque lame de cette pluralité de lames dans la position rétractée étant configurée pour exercer une force de rappel élastique dans la position déployée.

Grâce au fait que chaque lame de la pluralité de lames est déplaçable entre la position déployée et la position rétractée et grâce au fait que dans la position rétractée chaque lame de la pluralité de lames est configurée pour exercer une force de rappel dans la position déployée, la pluralité de lames permet d'absorber un jeu mécanique entre la surface d'appui correspondante de la borne de connexion associée et le dispositif d'interconnexion. Ainsi, le dispositif d'interconnexion selon l'invention permet un raccordement électrique fiable.

Selon des modes de réalisation particulier, le dispositif d'interconnexion comprend l'une ou plusieurs des caractéristiques suivantes, prise(s) isolément ou selon toute les combinaisons techniquement réalisables :
- le corps s'étend dans un plan principal, pour chaque pluralité de lames, chaque lame de cette pluralité de lames comprenant une extrémité de liaison reliée à la face arrière du corps et une extrémité libre opposée à l'extrémité de liaison, les extrémités libres de cette pluralité de lames pointant en direction d'un axe central correspondant sensiblement perpendiculaire au plan principal du corps ;
- pour chaque pluralité de lames, chaque lame de cette pluralité de lames comprend une portion plate comprenant l'extrémité libre de cette lame et une portion oblique comprenant l'extrémité de liaison de cette lame, la portion plate s'étendant sensiblement parallèlement au plan principal et formant un angle non nul avec la portion oblique ;
- pour chaque partie de raccordement, les lames de la pluralité de lames de cette partie de raccordement sont agencées en couronne ;
- pour chaque partie de raccordement, le système de fixation de cette partie de raccordement est configuré pour présenter une configuration neutre lorsque le système d'interconnexion est dans la configuration de repos et une configuration de fixation lorsque le système d'interconnexion est dans la configuration de raccordement, le système de fixation étant configuré pour être encliqueté sur les bords latéraux de fixation de la borne de connexion associée et pour exercer sur la borne de connexion associée des forces sensiblement perpendiculaires à la direction d'emboîtement et dirigées vers la borne de connexion associée dans la configuration de fixation ;
- pour chaque partie de raccordement, le système de fixation de cette partie de raccordement comprend des portions d'encliquetage sur les bords latéraux de fixation de la borne de connexion associée à cette partie de raccordement, lesdites portions d'encliquetage étant configurées pour s'éloigner l'une de l'autre selon une direction perpendiculaire à la direction d'emboîtement lors du passage de la configuration neutre dans la configuration de fixation ;
- chaque portion d'encliquetage est une portion recourbée en direction de la face arrière du corps ;
- les deux parties de raccordement sont espacées l'une de l'autre selon une direction d'espacement ;
- pour chaque partie de raccordement, le système de fixation de cette partie de raccordement comprenant deux portions d'encliquetage, les deux portions d'encliquetage étant agencées de part et d'autre de la pluralité de lames de cette partie de raccordement selon une direction perpendiculaire à la direction d'espacement ;
- chaque portion d'encliquetage présente une zone configurée pour être logée dans un logement correspondant aménagé dans les bords latéraux de fixation de la borne de connexion associée, la zone de chaque portion d'encliquetage présentant une forme complémentaire de la forme du logement correspondant ;
- le dispositif d'interconnexion comprend, en outre, une partie intermédiaire agencée entre les deux parties de raccordement, la partie intermédiaire comprenant un organe d'absorption d'un jeu mécanique, l'organe d'absorption étant configuré pour absorber un jeu mécanique entre les deux parties de raccordement selon la direction d'emboîtement et/ou selon une direction perpendiculaire à la direction d'emboîtement dans la configuration de raccordement.

L'invention concerne également un ensemble comprenant au moins deux cellules électrochimiques, chacune des deux cellules électrochimiques comprenant au moins une borne de connexion électrique comprenant une face supérieure et des bords latéraux de fixation et un dispositif d'interconnexion tel que décrit précédemment,
l'ensemble étant configurable entre une configuration démontée dans laquelle le dispositif d'interconnexion est dans la configuration de repos et une configuration raccordée dans laquelle le dispositif d'interconnexion est dans la configuration de raccordement,
dans la configuration de raccordement, le dispositif d'interconnexion raccordant électriquement et mécaniquement entre elles les deux bornes de connexion des deux cellules électrochimiques, chaque partie de raccordement étant emboîtée sur la borne de connexion associée,
pour chaque partie de raccordement, le système de fixation de cette partie de raccordement étant encliqueté sur les bords latéraux de fixation de la borne de connexion associée lorsque cette partie de raccordement est emboîtée sur la borne de connexion associée dans la configuration de raccordement,
dans la position de repos, le dispositif d'interconnexion étant à l'écart des deux cellules électrochimiques.

Selon un mode de réalisation de l'ensemble, le corps présente au moins une face arrière destinée à être orientée vers les deux cellules électrochimiques dans la configuration de raccordement, chacune des deux parties de raccordement comprenant, en outre, une pluralité de lames flexibles électriquement conductrices, chaque lame de la pluralité de lames faisant saillie de la face arrière du corps et étant configurée pour être agencée en appui selon la direction d'emboîtement contre au moins une zone d'appui correspondante de la face supérieure de la borne de connexion associée dans la configuration de raccordement de l'organe d'interconnexion, chaque pluralité de lames étant distincte de chaque système de fixation, pour chaque partie de raccordement, les lames de la pluralité de lames de cette partie de raccordement étant agencées en appui selon la direction d'emboîtement contre la zone d'appui correspondante de la face supérieure de la borne de connexion associée dans la configuration de raccordement.

L'invention concerne également un procédé d'interconnexion d'au moins deux cellules électrochimiques comprenant :
- fournir au moins deux cellules électrochimiques, chacune des deux cellules électrochimiques comprenant au moins une borne de connexion électrique comprenant une face supérieure et des bords latéraux de fixation,
- fournir un dispositif d'interconnexion tel que décrit précédemment, le dispositif d'interconnexion étant initialement dans la configuration de repos,
- placer le dispositif d'interconnexion dans la configuration de raccordement en emboîtant chaque partie de raccordement du dispositif d'interconnexion sur la borne de connexion associée à cette partie de raccordement selon la direction d'emboîtement.

Selon un mode de réalisation particulier du procédé décrit précédemment, au cours de l'emboîtement, une pression mécanique comprise entre 10 kg.m.s⁻² et 100 kg.m.s⁻² est appliquée sur chaque partie de raccordement selon la direction d'emboîtement pour emboîter chaque partie de raccordement sur la borne de connexion associée à cette partie de raccordement.

L'invention sera mieux comprise à la lecture de la description qui suit, donnée à titre d'exemple uniquement et faite en se référant aux dessins annexés, sur lesquels :
- la figure 1 est une vue schématique en perspective d'un ensemble selon l'invention dans la configuration raccordée,
- la figure 2 est une vue schématique en perspective de l'ensemble de la figure 1 dans la configuration démontée,
- la figure 3 est une vue en schématique en perspective et de détails d'un dispositif d'interconnexion de l'ensemble de la figure 2 dans une configuration de repos,
- la figure 4 est une vue en coupe du dispositif d'interconnexion de la figure 3, repérée par les flèches IV-IV sur la figure 3,
- la figure 5 est une vue de côté d'un dispositif d'interconnexion de l'ensemble de la figure 2, repérée par la flèche V sur la figure 2, et
- la figure 6 est une vue de côté du dispositif d'interconnexion de la figure 1 repérée par la flèche VI sur la figure 1.

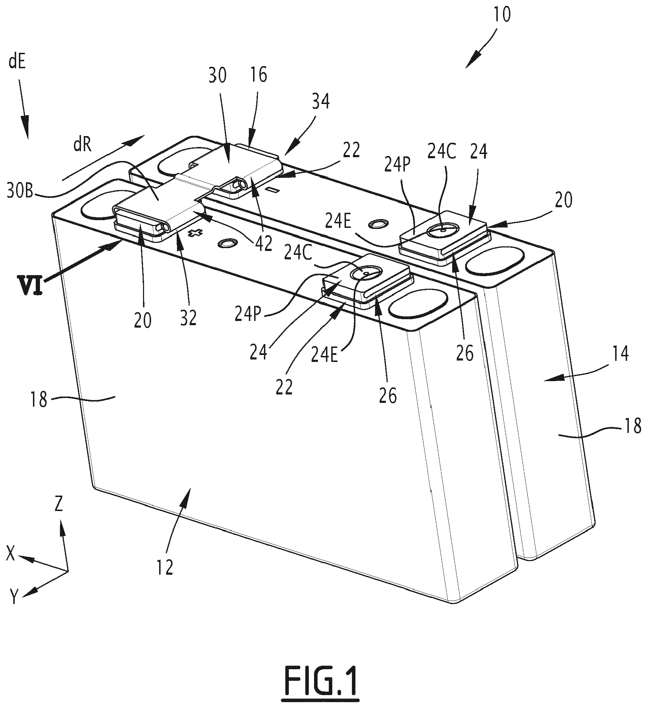

Un ensemble 10 est décrit dans la suite en référence aux figures 1 à 6.

L'ensemble 10 comprend au moins une première cellule électrochimique 12, pouvant être nommée dans la suite « première cellule 12 », comprenant au moins une borne de connexion électrique et une deuxième cellule électrochimique 14, pouvant être nommée dans la suite « deuxième cellule 14 », comprenant au moins une borne de connexion électrique et un dispositif d'interconnexion 16.

Dans cet exemple, l'ensemble 10 comprend deux cellules électrochimiques 12, 14. En variante, l'ensemble 10 comprend plus de deux cellules 12, 14.

Le dispositif d'interconnexion 16 est configuré pour raccorder entre elles, électriquement et mécaniquement, lesdites deux bornes de connexion électrique des deux cellules électrochimiques 12, 14.

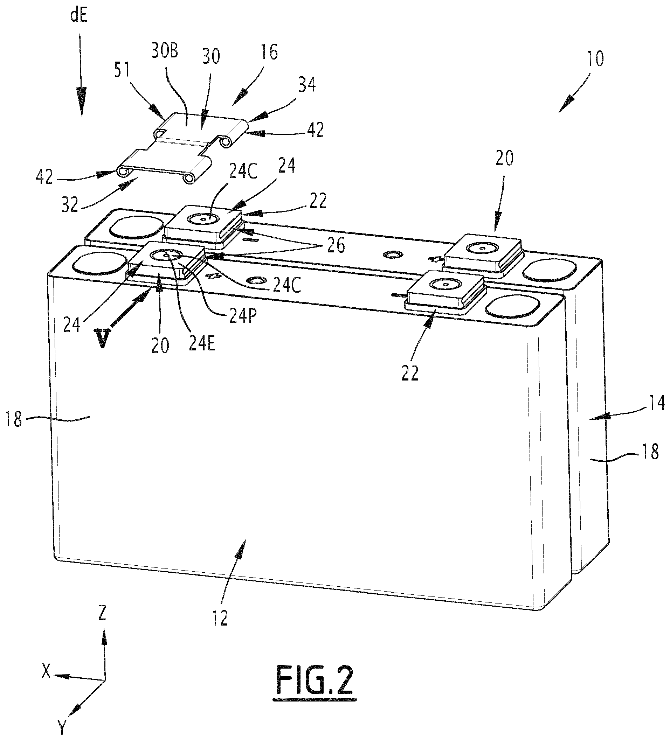

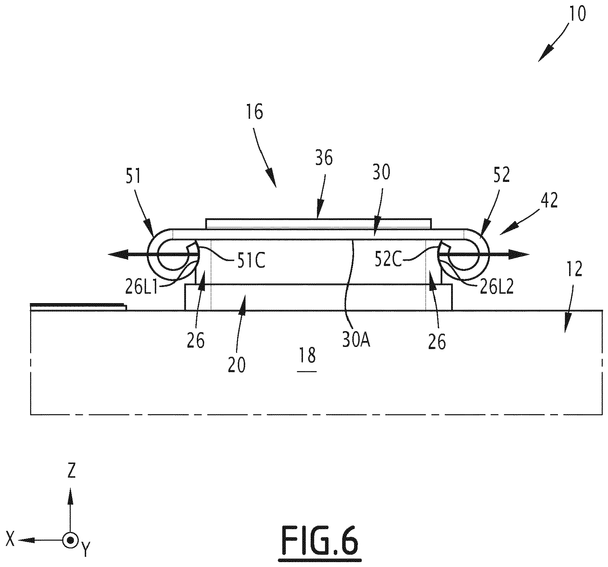

Le dispositif d'interconnexion 16 est configurable entre une configuration de raccordement (visible sur les figures 1 et 6) dans laquelle le dispositif d'interconnexion 16 raccorde électriquement et mécaniquement entre elles lesdites deux bornes de connexion électrique des deux cellules électrochimiques 12, 14 et une configuration de repos (visible sur les figures 2 à 5) dans laquelle le dispositif d'interconnexion 16 est à l'écart desdites deux bornes de connexion électrique.

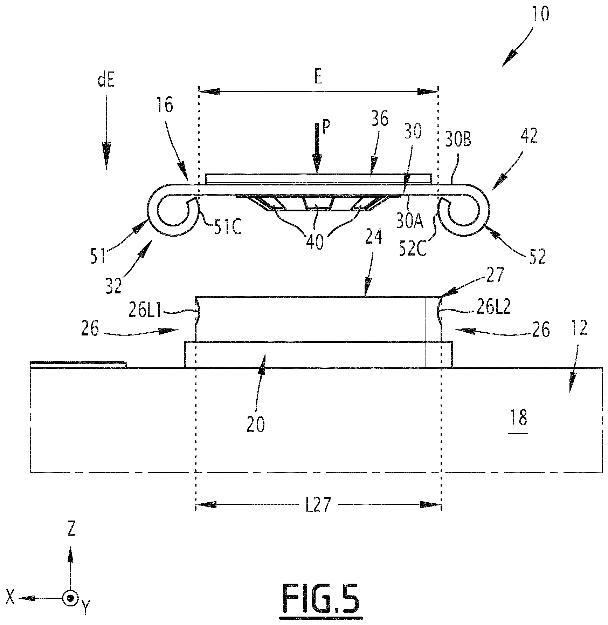

L'ensemble 10 est configurable entre une configuration démontée (visible sur les figures 2 et 5) dans laquelle le dispositif d'interconnexion 16 est dans la configuration de repos et une configuration raccordée (visible sur les figures 1 et 6) dans laquelle le dispositif d'interconnexion 16 est dans la configuration de raccordement.

Dans la suite, il est défini un repère orthonormé (X, Y, Z) attaché à l'ensemble 10. Il est en particulier défini une direction longitudinale X, repérée par un axe X, une direction transversale Y perpendiculaire à la direction transversale X, repérée par un axe Y, et une direction d'élévation Z, perpendiculaire à la direction longitudinale X et à la direction transversale Z, repérée par un axe Z.

Dans la suite, il sera considéré que les deux cellules électrochimiques 12, 14 sont identiques.

En référence aux figures 1, 2 et 5, chaque cellule électrochimique 12, 14, dite « cellule 12, 14 » dans la suite, comprend une enveloppe externe 18 et, comme indiqué cidessus, au moins une borne de connexion électrique, dite « borne » dans suite, disposée sur l'enveloppe externe 18.

Typiquement, chaque cellule 12, 14 comprend une première borne 20 et une deuxième borne 22.

Avantageusement, la première borne 20 et la deuxième borne 22 sont de polarités opposées. Par exemple, la première borne 20 est une borne de polarité négative et la deuxième borne 22 est une borne de polarité positive.

Chaque borne 20, 22 comprend une face supérieure 24 et des bords latéraux de fixation 26.

Chaque face supérieure 24 délimite au moins une zone d'appui correspondante d'une partie du dispositif d'interconnexion 16, comme cela sera davantage décrit dans la suite.

Dans l'exemple spécifique illustré, chaque face supérieure 24 présente une zone centrale 24C et une zone périphérique 24P.

Ladite zone d'appui correspondante correspond par exemple à la zone centrale 24C de la face supérieure 24.

La zone centrale 24C s'étend, par exemple, sensiblement perpendiculairement à la direction d'élévation Z.

Par exemple, la zone centrale 24C est une zone de la forme d'un disque.

Dans cet exemple, la zone périphérique 24P entoure la zone centrale 24C.

La zone périphérique 24P est, par exemple, plane.

La zone périphérique 24P s'étend, par exemple, sensiblement perpendiculairement à la direction d'élévation Z.

A titre d'illustration, la zone centrale 24C est raccordée à la zone périphérique 24P par un épaulement 24E.

En variante, chaque face supérieure 24 ne présente pas la zone centrale 24 et la zone périphérique 24P. Dans ce cas, chaque face supérieure 24 présente une unique surface plane. Dans ce cas, la zone d'appui correspondante est une zone de l'unique surface plane.

Dans l'exemple décrit, chaque borne 20, 22 comprend au moins deux bords latéraux de fixation 26 au dispositif d'interconnexion 16.

Pour chaque borne 20, 22, les bords latéraux de fixation 26 s'étendent sensiblement perpendiculairement à la face supérieure 24 de cette borne 20, 22.

Les deux bords latéraux de fixation 26 s'étendent parallèlement l'un à l'autre.

Chaque bord latéral de fixation 26 s'étend par exemple sensiblement parallèlement à la direction transversale Y.

Pour chaque borne 20, 22, chaque bord latéral de fixation 26 de cette borne 20, 22 délimite un logement 26L1, 26L2 (visible pour la première borne 20 de la première cellule 12 sur les figures 5 et 6) destiné à loger une portion d'encliquetage respective du dispositif d'interconnexion 16 comme cela sera décrit par la suite.

Ainsi, chaque borne 20, 22 présente un premier logement 26L1 et un deuxième logement 26L2 chacun ménagés dans un bord latéral de fixation 26 respectif parmi les deux bords latéraux de fixation 26 de cette borne 20, 22.

Avantageusement, chaque logement 26L1, 26L2 présente une forme complémentaire de la forme de la portion d'encliquetage du dispositif d'interconnexion 16 destinée à être logée dans ce logement 26L1, 26L2.

A titre d'illustration, comme visible sur les figures 5 et 6, chaque logement 26L1, 26L2 correspond à une zone en creux du bord latéral de fixation 26. Le creux de la zone en creux est orienté en direction de l'intérieur de la borne 20, 22. En d'autres termes, la concavité du creux est orientée en direction de l'intérieur de la borne 20, 22.

Avantageusement, chaque borne 20, 22 délimite un épaulement 27 agencé entre la face supérieure 24 et les deux logements 26L1, 26L2 de cette borne 20, 22. En d'autres termes, pour chaque borne 20, 22, l'épaulement 27 de cette borne 20, 22 raccorde la face supérieure 24 aux deux logements 26L1, 26L2 de cette borne 20, 22.

Comme visible sur la figure 5, pour chaque borne 20, 22, il est défini une longueur de l'épaulement 27, notée L27 selon la direction transversale X.

Chaque borne 20, 22 présente par exemple une forme sensiblement parallélépipédique.

Par exemple, chaque cellule 12, 14 comprend, en particulier, un empilement d'électrodes positives reliées les unes aux autres et un empilement d'électrodes négatives reliées les unes aux autres, séparées par un séparateur, connus sous le terme « stack ». En outre, chaque cellule 12, 14 comprend un électrolyte (non visible sur les figures) reçue dans l'enveloppe externe 18 de cette cellule 12, 14.

Par exemple, le dispositif d'interconnexion 16 est configuré pour raccorder électriquement et mécaniquement les deux bornes 20, 22 de polarité opposée des deux cellules 12, 14 dans le cas d'un raccordement en série des cellules 12, 14. En variante, le dispositif d'interconnexion 16 est configuré pour raccorder électriquement et mécaniquement les deux bornes 20, 20 ou 22, 22 de même polarité des deux cellules 12, 14 dans le cas d'un raccordement des cellules 12, 14 en parallèle.

Dans l'exemple spécifique décrit dans la présente demande, le dispositif d'interconnexion 16 est configuré pour raccorder électriquement et mécaniquement la première borne 20 de la première cellule 12 et la deuxième borne 22 de la deuxième cellule 14.

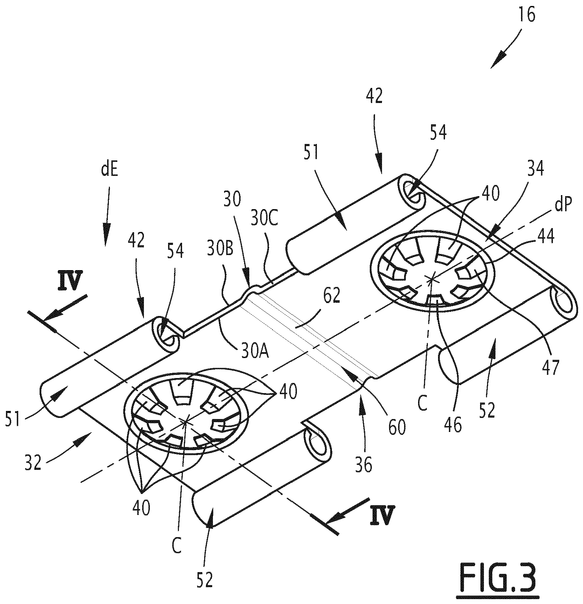

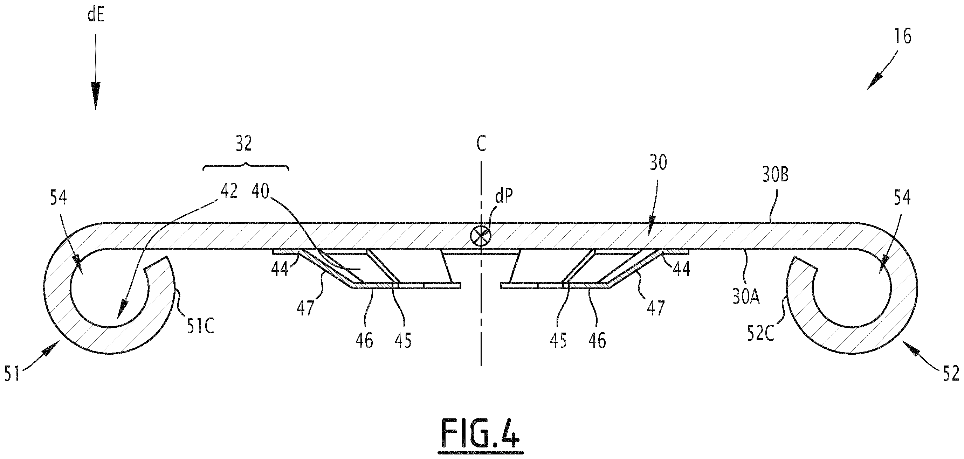

En référence aux figures 3 et 4, le dispositif d'interconnexion 16 comprend un corps 30, au moins deux parties de raccordement 32, 34, pouvant être nommées dans la suite « première partie de raccordement 32 » et « deuxième partie de raccordement 34 » et une partie intermédiaire 36 agencée entre les deux parties de raccordement 32, 34.

Le corps 30 s'étend dans un plan principal.

Le corps 30 présente une face arrière 30A destinée à être orienté vers les cellules 12, 14 dans la configuration de raccordement et une face avant 30B opposée à la face arrière 30A destinée à être orientée dans une direction opposée aux cellules 12, 14 dans la configuration de raccordement du dispositif d'interconnexion 16.

Le corps 30 présente un bord 30C.

Le bord 30C du corps 30 relie les faces avant et arrière 30B, 30A du corps 30.

Le corps 30 s'étend selon une direction d'extension principale dP.

Le corps 30 est avantageusement en un matériau électriquement conducteur.

Par exemple, le corps 30 est en un métal, tel que de l'aluminium.

Chaque partie de raccordement 32, 34 est configurée pour être emboîtées selon une direction d'emboîtement dE, respectivement, sur l'une des deux bornes 20, 22 des deux cellules électrochimiques 12, 14, dite « borne 20, 22 associée » lors du passage de la configuration de repos dans la configuration de raccordement.

En outre, chaque partie de raccordement 32, 34 est configurée pour être déboîtée de la borne 20, 22 associée lors du passage du dispositif d'interconnexion 16 de la configuration de raccordement dans la configuration de repos.

Selon l'exemple particulier illustré sur les figures, la première partie de raccordement 32 est configurée pour être emboîté sur la première borne 20 de la première cellule 12 et la deuxième partie de raccordement est configurée pour être emboîté sur la deuxième cellule 22 de la deuxième cellule 14.

Par exemple, la direction d'emboîtement dE est sensiblement parallèle à la direction normale au corps 30. La direction d'emboîtement dE est orientée depuis la face avant 30B vers la face arrière 30A du corps 30.

Les parties de raccordement 32, 34 sont espacées l'une de l'autre selon une direction d'espacement. La direction d'espacement est parallèle à la direction d'extension principale dP du corps 30. En outre, la direction d'espacement est sensiblement perpendiculaire à la direction d'emboîtement dE.

Comme visible sur les figures 3 et 4, chaque partie de raccordement 32, 34 comprend une pluralité de lames 40 flexibles, et un système de fixation 42.

Pour chaque pluralité de lames 40, chaque lame 40 de cette pluralité de lames 40 est configurée pour être agencée en appui selon la direction d'emboîtement dE contre la zone d'appui correspondante de la face supérieure 24 de la borne 20, 22 associée dans la configuration de raccordement du dispositif d'interconnexion 16.

Pour chaque partie de raccordement 32, 34, chaque lame 40 de la pluralité de lames 40 est flexible.

En outre, pour chaque pluralité de lames 40, chaque lame 40 de cette pluralité de lames 40 est déplaçable entre une position déployée lorsque le dispositif d'interconnexion 16 est dans la configuration de repos et une position rétractée distincte de la position déployée lorsque le dispositif d'interconnexion 16 est dans la configuration de raccordement. Chaque lame 40 est configurée pour être rétractée vers la face arrière 30A du corps 30 dans sa position rétractée par rapport à sa position dans la position déployée. En outre, chaque lame 40 de la pluralité de lames 40 dans la configuration rétractée est configurée pour exercer une force de rappel élastique dans la position déployée. En particulier, chaque lame 40 est configurée pour être comprimée entre la face arrière 30A du corps 30 et la zone d'appui correspondante de la face supérieure 24 de la borne 20, 22 associée dans sa position rétractée.

Il est entendu par « lames 40 flexibles » que la position de chaque lame 40 de chaque pluralité de lames 40 par rapport à la face arrière 30A du corps 30 est apte à être modifiée, par exemple par déformation et avantageusement par déformation élastique, entre la position déployée et la position rétractée.

Les lames 40 de la pluralité de lames 40 sont électriquement conductrices.

Les lames 40 font saillie de la face arrière 30A du corps 30.

Pour chaque pluralité de lames 40, il est défini un axe central C correspondant.

Pour chaque pluralité de lames 40, l'axe central C correspondant s'étend sensiblement perpendiculairement à la direction normale au corps 30.

En référence à la figure 4, chaque lame 40 présente une extrémité de liaison 44, une extrémité libre 45, une portion plate 46 et une portion oblique 47.

L'extrémité de liaison 44 est liée à la face arrière 30A du corps 30.

Par exemple, l'extrémité de liaison 44 est liée à la face arrière 30A du corps 30 par une soudure.

L'extrémité libre 45 est opposée à l'extrémité de liaison 44.

Il est défini un écartement entre l'extrémité libre 45 et la face arrière 30A du corps 30 en regard de ladite extrémité 45 libre le long de la direction d'emboîtement dE. Cet écartement est apte à varier entre les positions déployée et rétractée de la lame 40.

L'extrémité libre 45 est configurée pour être en appui contre la zone d'appui correspondante de la face supérieure 24 de la borne 20, 22 associée.

La portion plate 46 comprend l'extrémité libre 45.

La portion plate 46, s'étend sensiblement parallèlement au plan principal du corps 30.

La portion plate 46 est configurée pour être en appui sur la zone d'appui correspondante de la surface supérieure 24 de la borne 20, 22 associée.

La portion oblique 47 comprend l'extrémité de liaison 44.

La portion oblique 47 forme un angle non nul avec la portion plate 46.

Comme visible sur la figure 3, pour chaque partie de raccordement 32, 34, les lames 40 de la pluralité de lames 40 de cette partie de raccordement 32, 34 sont agencées en couronne. Plus précisément, les lames 40 de la pluralité de lames 40 sont agencées en couronne autour de l'axe central C correspondant.

En particulier, pour chaque pluralité de lames 40, les extrémités libres 45 de cette pluralité de lames 40 pointent en direction de l'axe central C correspondant. Autrement dit, les extrémités libres 45 des lames 40 sont orientées selon une direction centripète en direction de l'axe central C correspondant.

En outre, par exemple, pour chaque pluralité de lames 40, les extrémités de liaison 44 des lames 40 de cette pluralité de lames 40 sont reliées les unes aux autre pour former un contour faisant saillie de la face arrière 30A du corps 30.

Optionnellement, le contour saillant présente avantageusement une forme complémentaire de l'épaulement 24E de la face supérieure 24 de la borne associée 20, 22.

Chaque lame 40 présente une épaisseur supérieure ou égale à 0,1 millimètres (mm) et inférieure ou égale à 0,5 mm.

Par exemple, chaque lame 40 est en un métal.

Par exemple, le métal est de l'aluminium.

Optionnellement, un revêtement recouvre le corps de chaque lame 40.

Par exemple, le revêtement est destiné à favoriser la conduction électrique.

Par exemple, chaque pluralité de lames 40 comprend au moins trois lames 40. A titre d'illustration, chaque pluralité de lames 40 comprend un nombre de lames 40 supérieur ou égal à trois et inférieur ou égal à cinquante. Par exemple, le nombre de lames 40 est égal à sept.

Les deux pluralités de lames 40 sont par exemple espacées l'une par rapport à l'autre selon la direction d'espacement.

Pour chaque partie de raccordement 32, 34, le système de fixation 42 de cette partie de raccordement 32, 34 est solidaire du corps 30 et distinct de la pluralité de lames 40 flexibles de cette partie de raccordement 32, 34.

Pour chaque partie de raccordement 32, 34, le système de fixation 42 est configuré pour être encliqueté sur les bords latéraux de fixation 26 de la borne 20, 22 associée lorsque ladite partie de raccordement 32, 34 est emboîtée sur la borne 20, 22 associée dans la configuration de raccordement du dispositif d'interconnexion 16.

Il est entendu par « le système de fixation 42 est configuré pour être encliqueté sur les bords latéraux de fixation 26 de la borne 20, 22 associée » que le dispositif de fixation 42 est configuré pour être emboîté les bords latéraux de fixation 26 de la borne 20, 22 associée par déformation élastique du dispositif de fixation 42.

En particulier, pour chaque partie de raccordement 32, 34, le système de fixation 42 de cette partie de raccordement 32, 34 est configuré pour présenter une configuration neutre lorsque le dispositif d'interconnexion 16 est dans la configuration de repos (visible sur les figures 2 à 5) et une configuration de fixation (visible sur les figures 1 et 6) lorsque le dispositif d'interconnexion 16 est dans la configuration de raccordement.

Chaque système de fixation 42 est configuré pour exercer sur la borne 20, 22 associée des forces sensiblement perpendiculaires à la direction d'emboîtement dE et dirigées vers la borne 20, 22 associée dans la configuration de fixation de ce système de fixation 42.

Par exemple, chaque système de fixation 42 comprend des portions d'encliquetage 51, 52.

Avantageusement, chaque dispositif de fixation 42 comprend deux portions d'encliquetage 51, 52, pouvant être nommées dans la suite «première portion d'encliquetage 51 » et « deuxième portion d'encliquetage 52 ».

Comme en particulier visible sur la figure 4, pour chaque dispositif de fixation 42, chaque portion d'encliquetage 51, 52 de ce dispositif de fixation 42, comprend une zone de contact 51C, 52C destinée à être logé dans un logement 26L1, 26L2 respectif, dit « logement 26L1, 26L2 correspondant », de la borne 20, 22 associée dans la configuration de fixation de ce dispositif de fixation 42.

Chaque zone de contact 51C, 52C présente avantageusement une forme complémentaire de celle du logement 26L1, 26L2 correspondant.

Dans l'exemple décrit, pour chaque système de fixation 42, les deux portions d'encliquetage 51, 52 sont agencées en regard l'une de l'autre selon une direction perpendiculaire à la direction d'espacement.

A titre d'illustration, pour chaque partie de raccordement 32, 34, les portions d'encliquetage 51, 52 du système de fixation 42 de cette partie de raccordement 32, 34 sont agencées de part et d'autre de la pluralité de lames 40 de cette partie de raccordement 32, 34 selon une direction perpendiculaire à la direction d'espacement.

Pour chaque système de fixation 42, les portions d'encliquetage 51, 52 sont configurées pour s'éloigner l'une de l'autre selon la direction perpendiculaire à la direction d'emboîtement dE depuis la configuration neutre dans la configuration de fixation de ce système de fixation 42.

En particulier, pour chaque système de fixation 42, les zones de contact 51C, 52C sont configurées pour s'éloigner l'une de l'autre selon la direction perpendiculaire à la direction d'emboîtement dE depuis la configuration neutre dans la configuration de fixation de ce système de fixation 42.

Comme visible sur la figure 5, pour chaque système de fixation 42, il est défini un écartement E entre les deux portions d'encliquetage 51, 52 dans la position de repos de ce système de fixation 42.

Pour chaque système de fixation 42, l'écartement E est strictement inférieur à la longueur L27 de l'épaulement 27 de la borne 20, 22 associée sur laquelle le système de fixation 42 est destiné à être encliqueté.

Par exemple, chaque portion d'encliquetage 51, 52 est reliée à une portion du bord 30C du corps 30 et s'étend à partir de cette portion du bord 30C du corps 30.

Chaque portion d'encliquetage 51, 52 est par exemple venue de matière avec le corps 30.

Comme visible sur la figure 3, les premières portions d'encliquetage 51 des deux parties de raccordement 32, 34 sont par exemple espacées l'une de l'autre selon une direction parallèle à la direction d'espacement.

En outre, les deuxièmes portions d'encliquetage 52 des deux parties de raccordement 32, 34 sont par exemple espacées l'une de l'autre selon une direction parallèle à la direction d'espacement.

Par exemple, chaque portion d'encliquetage 51, 52 est en un métal.

Le métal est par exemple de l'aluminium.

Dans l'exemple particulier décrit, les deux portions d'encliquetage 51, 52 sont chacune une portion recourbée.

Chaque portion recourbée est recourbée en direction de la face arrière 30A du corps 30.

Chaque portion recourbée délimite une boucle 54 non fermée.

Pour chaque système de fixation 42, les deux portions recourbées délimitent les zones de contacts 51C, 52C.

Chaque portion recourbée s'étend par exemple le long de la direction d'espacement.

A titre d'illustration, les deux portions recourbées s'étendent en regard l'une de l'autre selon une direction sensiblement parallèle à la direction d'espacement.

A titre d'illustration, pour chaque partie de raccordement 32, 34, les portions recourbées du système de fixation 42 de cette partie de raccordement 32, 34 sont agencées de part et d'autre de la pluralité de lames 40 de cette partie de raccordement 32, 34 selon une direction perpendiculaire à la direction d'espacement.

Avantageusement, chaque système de fixation 42 permet d'absorber un jeu mécanique selon la direction d'espacement. En d'autres termes, chaque système de fixation 42 autorise une translation de l'organe d'interconnexion 16 selon la direction d'espacement par rapport aux bornes 20, 22 dans la configuration de raccordement.

Comme visible sur la figure 3, la partie intermédiaire 36 est agencée entre les deux parties de raccordement 32, 34.

La partie intermédiaire 36 comprend un organe d'absorption 60 d'un jeu mécanique entre les deux parties de raccordement 32, 34 selon la direction d'emboîtement dE et/ou selon une direction perpendiculaire à la direction d'emboîtement dans la configuration de raccordement.

En d'autres termes, l'organe d'absorption 60 autorise un jeu mécanique entre les deux parties de raccordement 32, 34 selon la direction d'emboîtement dE. Ainsi, l'organe d'absorption 60 autorise le mouvement entre les deux parties de raccordement 32, 34 selon la direction d'emboîtement dE et/ou le désalignement des deux parties de raccordement 32, 34 selon la direction d'emboîtement dE.

En outre, dans le présent exemple de réalisation, l'organe d'absorption 60 autorise un jeu mécanique entre les deux parties de raccordement 32, 34 selon la direction d'espacement. Ainsi, l'organe d'absorption 60 autorise le mouvement entre les deux parties de raccordement 32, 34 selon la direction d'espacement.

Dans l'exemple décrit, l'organe d'absorption 60 comprend une rainure 62 ménagée dans le corps 30.

En particulier, la rainure 62 définit un creux dans la face arrière 30A du corps 30.

La rainure 62 s'étend selon une direction perpendiculaire à la direction d'espacement.

Ainsi, le dispositif d'interconnexion 16 selon l'invention est flexible selon la direction d'emboîtement dE et la direction d'espacement.

Ainsi, comme visible sur les figures 2 à 5, dans la configuration démontée de l'ensemble 10, le dispositif d'interconnexion 16 est dans la position de repos, à savoir à l'écart des deux bornes 20, 22 des cellules 12, 14.

Dans la position de repos, pour chaque partie de raccordement 32, 34, la pluralité de lames 40 de cette partie de raccordement 32, 34 est dans la position déployée et le système de fixation 42 de cette partie de raccordement 32, 34 est dans la position de repos.

Comme visible sur les figures 1 et 6, dans la configuration raccordée de l'ensemble 10, les deux cellules électrochimiques 12, 14 sont juxtaposées l'une par rapport à l'autre selon une direction de raccordement dR.

La direction de raccordement dR est par exemple sensiblement parallèle à la direction transversale Y.

Les deux cellules 12, 14 sont alignées l'une par rapport à l'autre selon la direction de raccordement dR.

En outre, le dispositif d'interconnexion 16 est dans la configuration de raccordement.

Dans la configuration de raccordement, la direction d'espacement des deux parties de raccordement 32, 34 est sensiblement parallèle à la direction transversale Y.

Ainsi, dans la configuration de raccordement, chaque partie de raccordement 32, 34 du dispositif d'interconnexion 16 est emboîtée sur la borne 20, 22 associée à cette partie de raccordement 32, 34.

Dans l'exemple décrit, la première partie de raccordement 32 est emboîtée sur la première borne 20 de la première cellule 12 et la deuxième partie de raccordement 34 est emboîtée sur la deuxième borne 22 de la deuxième cellule 14.

En particulier, dans la position de raccordement, les lames 40 de chaque pluralité de lames 40 sont dans la position rétractée.

En d'autres termes, pour chaque lame 40 de chaque pluralité de lames 40, l'écartement entre l'extrémité libre 45 de cette lame 40 et la face arrière 30A du corps 30 dans la position rétractée est strictement inférieure à l'écartement entre l'extrémité libre 45 de cette lame 40 et la face arrière 30A du corps 30 dans la position déployée.

En particulier, dans la position rétractée, les lames 40 sont compressées entre la surface supérieure 24 de la borne associée 20, 22 et la face arrière 30A du corps 30.

En outre, dans la configuration de raccordement, chaque lame 40 de chaque pluralité de lames 40 est en appui selon la direction d'emboîtement dE contre la zone d'appui correspondante de la face supérieure 24 de la borne 20, 22 associée.

Dans l'exemple particulier décrit, la pluralité de lames 40 de la première partie de raccordement 32 est en appui contre la zone d'appui correspondante de la face supérieure 24 de la première borne 20 et la pluralité de lames de la deuxième partie de raccordement 34 est en appui contre la zone d'appui correspondante de la face supérieure 24 de la deuxième borne 22.

Pour chaque partie de raccordement 32, 34, lorsque chaque lame 40 est dans la position rétractée, c'est-à-dire compressée entre la face supérieure 24 de la borne associée et la face arrière 30A du corps 30, ladite lame 40 exerce une force de rappel élastique vers la position déployée. Ainsi, chaque pluralité de lames 40 absorbe les éventuels jeux mécaniques pouvant apparaître selon la direction d'emboîtement dE entre le dispositif d'interconnexion 16 et la zone d'appui correspondante de la face supérieure 24 de la borne 20, 22 associée.

En outre, dans la configuration de raccordement du dispositif d'interconnexion 16, chaque système de fixation 42 de cette partie de raccordement 32, 34 est dans la configuration de fixation.

Dans la configuration de fixation, chaque système de fixation 42 est encliqueté sur les bords latéraux 26 de fixation 26 de la borne 20, 22 associée.

Dans l'exemple particulier décrit, le système de fixation 42 de la première partie de raccordement 32 est encliqueté sur les bords latéraux de fixation 26 de la première borne 20 de la première cellule 12 et le système de fixation 42 de la deuxième partie de raccordement 34 est encliqueté sur les bords latéraux de fixation 26 de la deuxième borne 22 de la deuxième cellule 14.

En particulier, comme visible sur la figure 6, pour chaque dispositif de fixation 42, chaque portion d'encliquetage 51, 52 de ce dispositif de fixation 42 est logée dans le logement 26L1, 26L2 correspondant à cette portion d'encliquetage 51, 52.

Pour chaque partie de raccordement 32, 34, le système de fixation 42 de cette partie de raccordement 32, 34 exerce sur la borne 20, 22 associée des forces sensiblement perpendiculaires à la direction d'emboîtement dE et dirigées vers la borne 20, 22 associée dans la configuration de fixation.

Le fonctionnement de l'ensemble 10 est décrit par la suite.

Dans la configuration démontée de l'ensemble 10, aucun courant électrique n'est apte à circuler entre la première borne 20 de la première cellule 12 et la deuxième borne 22 de la deuxième cellule 14.

Dans la configuration raccordée de l'ensemble 10, un courant électrique est apte à circuler depuis l'une des bornes 20, 22 de l'une des deux cellules 12, 14 vers l'autre borne 20, 22 de l'autre des deux cellules 12, 14.

Par exemple, le courant électrique sortant de la deuxième borne 22 de la deuxième cellule 14 est transmis à la pluralité de lames 40 de la deuxième partie de raccordement 34 de l'organe d'interconnexion 16.

Le courant circule ensuite à travers le corps 30 jusqu'à la première partie de raccordement 32 emboîtée sur la première borne 20 de la première cellule 12.

Le courant est alors transmis à la pluralité de lames 40 de la première partie de raccordement 32 qui à son tour transmet le courant à la première borne 20 de la première cellule 12.

Un procédé d'interconnexion d'au moins deux cellules électrochimiques 12, 14 est décrit dans la suite.

Initialement, comme visible sur la figure 2, les première et deuxième cellules 12, 14 sont disposées côte à côte selon la direction de raccordement dR.

Ensuite, le dispositif d'interconnexion 16, initialement dans sa configuration de repos, est positionné au-dessus des bornes 20, 22 à raccorder entre elles de sorte que la première partie de raccordement 32 est agencée en regard de la face supérieure 24 de la première borne 20 de la première cellule 12 et que la deuxième partie de raccordement 34 est agencée en regard de la face supérieure 24 de la deuxième borne 22 de la deuxième cellule 14.

Dans le cas illustré sur les figures, un tel positionnement est facilité en faisant venir en butée le contour saillant de chaque pluralité de lames 40 avec l'épaulement 24E de la face supérieure 24 de la borne 20, 22 associée.

Ensuite, le dispositif d'interconnexion 16 est emboîté selon la direction d'emboîtement dE sur les bornes 20, 22 associées des deux cellules 12, 14.

En d'autres termes, le dispositif d'interconnexion 16 est placé depuis sa configuration de repos dans sa configuration de raccordement en emboîtant chaque partie de raccordement 32, 34 du dispositif d'interconnexion 16 sur la borne de connexion 20, 22 associée à cette partie de raccordement 32, 34 selon la direction d'emboîtement dE.

En particulier, chaque partie de raccordement 32, 34 est raccordée, par emboîtement selon la direction d'emboîtement dE, sur la borne associée 20, 22 à cette partie de raccordement 32, 34 de sorte à placer le dispositif d'interconnexion 16 dans la configuration de raccordement.

Lors de l'emboîtement, chaque partie de raccordement 32, 34 est mobile en translation selon la direction d'emboîtement dE.

La direction d'emboîtement dE est dans cet exemple sensiblement parallèle à la direction d'élévation Z. Ainsi, la direction d'emboîtement dE est sensiblement parallèle à la normale aux surfaces supérieures 24 des bornes 20, 22.

Ainsi, par exemple, dans la configuration de raccordement, la première partie de raccordement 32 est emboîtée sur la première borne 20 et la deuxième partie de raccordement 34 est emboîtée sur la deuxième borne 22.

Comme visible sur la figure 5, l'emboîtement s'effectue en appliquant une pression P comprise (bornes incluses) entre 10 kg.m.s⁻² et 100 kg.m.s⁻² selon la direction d'emboîtement dE sur chaque partie de raccordement 32, 34.

Une telle pression P est appliquée à la main ou à l'aide d'un outil.

Par exemple, une première pression est appliquée sur la face avant 30B du corps 30 en regard de la première partie de raccordement 32 pour emboîter la première partie de raccordement 32 sur la première borne 20 et une deuxième pression est appliquée sur la face avant 30B du corps 30 en regard de la deuxième partie de raccordement 34 pour emboîter la deuxième partie de raccordement 34 sur la deuxième borne 22.

Au cours de l'emboîtement selon la direction d'emboîtement dE, chaque lame de la pluralité de lames 40 passe de la position déployée dans la position rétractée.

Pour chaque pluralité de lames 40 dans la position rétractée, un contact optimal s'effectue entre les lames 40 de cette pluralité de lames 40 et la zone d'appui correspondante de la face supérieure 24 de la borne associée 20, 22.

En outre, au cours de l'emboîtement, chaque dispositif de fixation 42 passe de la configuration neutre dans la configuration de fixation.

Au cours de l'emboîtement selon la direction d'emboîtement dE, pour chaque système de fixation 42, les portions d'encliquetage 51, 52 s'éloignent les unes des autres en franchissant l'épaulement 27 de la borne associé 20, 22. Un tel éloignement est illustré schématiquement sur la figure 6 par des flèches orientées dans des sens opposés.

Puis, pour chaque système de fixation 42, la première portion de contact 51C et la deuxième portion de contact 52C de ce système de fixation 42 se logent dans le premier logement 26L1, respectivement dans le deuxième logement 26L2 des bords latéraux de fixation 26 correspondants.

Dans cette position, l'ensemble 10 est dans la configuration raccordée.

Ainsi, les deux bornes 20, 22 sont raccordées électriquement entre elles. Dans cette position, le courant est apte à circuler entre les deux bornes 20, 22 raccordées entre-elle par le dispositif d'interconnexion 16.

Le dispositif d'interconnexion 16 selon l'invention permet la transmission d'un courant électrique pouvant atteindre 800 ampères (A). En outre, le dispositif d'interconnexion 16 selon l'invention permet de transmettre une énergie électrique pouvant atteindre 1000 Volts (V) en courant continu.

En particulier, chaque pluralité de lames 40 permet le raccordement électrique des bornes 20, 22.

En outre, les deux bornes 20, 22 sont raccordées mécaniquement entre elles grâce aux dispositifs de fixation 42.

Le dispositif d'interconnexion 16 selon l'invention permet un montage facilité du dispositif d'interconnexion 16 sur les cellules 20, 22 et permet un démontage facilité du dispositif d'interconnexion 16 des cellules 20, 22.

En particulier, chaque dispositif de fixation 42 par encliquetage permet un raccordement facilité de l'organe d'interconnexion 16 aux bornes 20, 22 correspondantes des cellules 12, 14.

En effet, pour chaque portion de raccordement 32, 34, un seul mouvement selon la direction d'emboîtement dE est nécessaire pour faire passer le dispositif de fixation 42 de cette partie de raccordement 32, 34 de la configuration neutre dans la configuration de fixation.

Chaque dispositif de fixation 42 permet de verrouiller chaque partie de raccordement 32, 34 sur la borne de connexion 20, 22 associée. Chaque système de fixation 42 est donc configuré pour assurer donc la bonne tenue mécanique de l'organe d'interconnexion 16 sur les bornes de connexion 20, 22 dans la configuration de raccordement.

Chaque pluralité de lames 40 est configurée pour raccorder électriquement des deux bornes 20, 22.

En outre, grâce au fait que les lames 40 de chaque pluralité de lames 40 sont flexibles, elles peuvent être compressées contre la zone d'appui correspondante de la face supérieure 24 de la bornes 20, 22 associée. Ainsi, un contact optimal est obtenu entre chaque lame 40 et la zone d'appui correspondante.

De plus, grâce au fait que lorsque chaque lame 40 est dans la position rétractée, c'est-à-dire compressée entre la face supérieure 24 de la borne associée et la face arrière 30A du corps, ladite lame 40 exerce une force de rappel élastique vers la position déployée, chaque pluralité de lames 40 permet d'absorber les éventuels jeux mécaniques pouvant apparaître entre le dispositif d'interconnexion 16 et la face supérieure 24 de la borne 20, 22 associée lorsque l'ensemble 10 est dans la configuration raccordée. Aussi, un raccordement électrique fiable est obtenu.

Le dispositif d'interconnexion 16 est facilement démontable des bornes 20, 22 associées en désengageant les dispositifs de fixation 42 des logements associés des bornes 20, 22.

En outre, le dispositif d'interconnexion 16 est réutilisable une fois qu'il a été démonté des bornes 20, 22.

## Revendications

1. Dispositif d'interconnexion (16) d'au moins deux cellules électrochimiques (12, 14) de véhicule électrique, chacune des deux cellules électrochimiques (12, 14) comprenant au moins une borne de connexion (20, 22) électrique comprenant une face supérieure (24) et des bords latéraux de fixation (26), le dispositif d'interconnexion (16) étant configuré pour raccorder entre elles électriquement et mécaniquement lesdites deux bornes de connexion (20, 22) des deux cellules électrochimiques (12, 14),
le dispositif d'interconnexion (16) étant configurable entre une configuration de raccordement dans laquelle il raccorde électriquement et mécaniquement entre elles les deux bornes de connexion (20, 22) des deux cellules électrochimiques (12, 14) et une configuration de repos dans laquelle il est à l'écart des bornes de connexion (20, 22),
le dispositif d'interconnexion (16) comprenant un corps (30) et au moins deux parties de raccordement (32, 34) configurées pour être emboîtées selon une direction d'emboîtement (dE), respectivement, sur l'une des deux bornes de connexion (20, 22) des deux cellules électrochimiques (12, 14), dite « borne de connexion (20, 22) associée », lors du passage de la configuration de repos dans la configuration de raccordement,
chacune des deux parties de raccordement (32, 34) comprenant un système de fixation (42) solidaire du corps (30), configuré pour être encliqueté sur les bords latéraux de fixation (26) de la borne de connexion (20, 22) associée lorsque ladite partie de raccordement (32, 34) est emboîtée sur la borne de connexion (20, 22) associée dans la configuration de raccordement.

2. Dispositif d'interconnexion selon la revendication 1, dans lequel le corps (30) présente au moins une face arrière (30A) destinée à être orientée vers les deux cellules électrochimiques (12, 14) dans la configuration de raccordement, chacune des deux parties de raccordement (32, 34) comprenant, en outre, une pluralité de lames (40) flexibles électriquement conductrices, chaque lame (40) de la pluralité de lames (40) faisant saillie de la face arrière (30A) du corps (30) et étant configurée pour être agencée en appui selon la direction d'emboîtement (dE) contre au moins une zone d'appui correspondante de la face supérieure (24) de la borne de connexion (20, 22) associée dans la configuration de raccordement de l'organe d'interconnexion (16), chaque pluralité de lames (40) étant distincte de chaque système de fixation (42).

3. Dispositif d'interconnexion selon la revendication 2, dans lequel, pour chaque pluralité de lames (40), chaque lame (40) de cette pluralité de lames (40) est déplaçable entre une position déployée lorsque le dispositif d'interconnexion (16) est dans la configuration de repos et une position rétractée distincte de la position déployée lorsque le dispositif d'interconnexion (16) est dans la configuration de raccordement, chaque lame (40) de cette pluralité de lames (40) étant configurée pour être rétractée vers la face arrière (30A) du corps (30) dans sa position rétractée par rapport à sa position dans la position déployée et, chaque lame (40) de cette pluralité de lames (40) dans la position rétractée étant configurée pour exercer une force de rappel élastique dans la position déployée.

4. Dispositif d'interconnexion selon la revendication 2 ou 3, dans lequel le corps (30) s'étend dans un plan principal, pour chaque pluralité de lames (40), chaque lame de cette pluralité de lames (40) comprenant une extrémité de liaison (44) reliée à la face arrière (30A) du corps (30) et une extrémité libre (45) opposée à l'extrémité de liaison (44), les extrémités libres (45) de cette pluralité de lames (40) pointant en direction d'un axe central (C) correspondant sensiblement perpendiculaire au plan principal du corps (30).

5. Dispositif d'interconnexion selon la revendication 4, dans lequel, pour chaque pluralité de lames (40), chaque lame (40) de cette pluralité de lames (40) comprend une portion plate (46) comprenant l'extrémité libre (45) de cette lame (40) et une portion oblique (47) comprenant l'extrémité de liaison (44) de cette lame (40), la portion plate (46) s'étendant sensiblement parallèlement au plan principal et formant un angle non nul avec la portion oblique (47).

6. Dispositif d'interconnexion selon l'une quelconque des revendications 2 à 5, dans lequel, pour chaque partie de raccordement (32, 34), les lames (40) de la pluralité de lames (40) de cette partie de raccordement (32, 34) sont agencées en couronne.

7. Dispositif d'interconnexion selon l'une quelconque des revendications précédentes, dans lequel, pour chaque partie de raccordement (32, 34), le système de fixation (42) de cette partie de raccordement (32, 34) est configuré pour présenter une configuration neutre lorsque le système d'interconnexion (16) est dans la configuration de repos et une configuration de fixation lorsque le système d'interconnexion (16) est dans la configuration de raccordement, le système de fixation (42) étant configuré pour être encliqueté sur les bords latéraux de fixation (26) de la borne de connexion (20, 22) associée et pour exercer sur la borne de connexion (20, 22) associée des forces sensiblement perpendiculaires à la direction d'emboîtement (dE) et dirigées vers la borne de connexion (20, 22) associée dans la configuration de fixation.

8. Dispositif d'interconnexion selon la revendication 7, dans lequel, pour chaque partie de raccordement (32, 34), le système de fixation (42) de cette partie de raccordement (32, 34) comprend des portions d'encliquetage (51, 52) sur les bords latéraux de fixation (26) de la borne de connexion (20, 22) associée à cette partie de raccordement (32, 34), lesdites portions d'encliquetage (51, 52) étant configurées pour s'éloigner l'une de l'autre selon une direction perpendiculaire à la direction d'emboîtement (dE) lors du passage de la configuration neutre dans la configuration de fixation.

9. Dispositif d'interconnexion selon la revendication 8, dans lequel chaque portion d'encliquetage (51, 52) est une portion recourbée en direction de la face arrière (30A) du corps (30).

10. Dispositif d'interconnexion selon la revendication 8 ou 9 prise(s) en combinaison avec la revendication 2, dans lequel, les deux parties de raccordement (32, 34) sont espacées l'une de l'autre selon une direction d'espacement,
pour chaque partie de raccordement (32, 34), le système de fixation (42) de cette partie de raccordement (32, 34) comprenant deux portions d'encliquetage (51, 52), les deux portions d'encliquetage (51, 52) étant agencées de part et d'autre de la pluralité de lames (40) de cette partie de raccordement (32, 34) selon une direction perpendiculaire à la direction d'espacement.

11. Dispositif d'interconnexion selon l'une quelconque des revendications 8 à 10, dans lequel, chaque portion d'encliquetage (51, 52) présente une zone (51C, 52C) configurée pour être logée dans un logement (26L1, 26L2) correspondant aménagé dans les bords latéraux de fixation (26) de la borne de connexion (20, 22) associée, la zone (51C, 52C) de chaque portion d'encliquetage (51, 52) présentant une forme complémentaire de la forme du logement (26L1, 26L2) correspondant.

12. Dispositif d'interconnexion selon l'une quelconque des revendications précédentes, dans lequel le dispositif d'interconnexion (16) comprend, en outre, une partie intermédiaire (36) agencée entre les deux parties de raccordement (32, 34), la partie intermédiaire (36) comprenant un organe d'absorption (60) d'un jeu mécanique, l'organe d'absorption (60) étant configuré pour absorber un jeu mécanique entre les deux parties de raccordement (32, 34) selon la direction d'emboîtement (dE) et/ou selon une direction perpendiculaire à la direction d'emboîtement (dE) dans la configuration de raccordement.

13. Ensemble (10) comprenant :
- au moins deux cellules électrochimiques (12, 14), chacune des deux cellules électrochimiques (12, 14) comprenant au moins une borne de connexion (20, 22) électrique comprenant une face supérieure (24) et des bords latéraux de fixation (26), et
- un dispositif d'interconnexion (16) selon l'une quelconque des revendications précédentes,
l'ensemble (10) étant configurable entre une configuration démontée dans laquelle le dispositif d'interconnexion (16) est dans la configuration de repos et une configuration raccordée dans laquelle le dispositif d'interconnexion (16) est dans la configuration de raccordement,
dans la configuration de raccordement, le dispositif d'interconnexion (16) raccordant électriquement et mécaniquement entre elles les deux bornes de connexion (20, 22) des deux cellules électrochimiques (12, 14), chaque partie de raccordement (32, 34) étant emboîtée sur la borne de connexion (20, 22) associée,
pour chaque partie de raccordement (32, 34), le système de fixation (42) de cette partie de raccordement (32, 34) étant encliqueté sur les bords latéraux de fixation (26) de la borne de connexion (20, 22) associée lorsque cette partie de raccordement (32, 34) est emboîtée sur la borne de connexion (20, 22) associée dans la configuration de raccordement,
dans la position de repos, le dispositif d'interconnexion (16) étant à l'écart des deux cellules électrochimiques.

14. Procédé d'interconnexion d'au moins deux cellules électrochimiques (12, 14) comprenant :
- fournir au moins deux cellules électrochimiques (12, 14), chacune des deux cellules électrochimiques (12, 14) comprenant au moins une borne de connexion (20, 22) électrique comprenant une face supérieure (24) et des bords latéraux de fixation (26),
- fournir un dispositif d'interconnexion (16) selon l'une quelconque des revendications 1 à 12, le dispositif d'interconnexion (16) étant initialement dans la configuration de repos,
- placer le dispositif d'interconnexion (16) dans la configuration de raccordement en emboîtant chaque partie de raccordement (32, 34) du dispositif d'interconnexion (16) sur la borne de connexion (20, 22) associée à cette partie de raccordement (32, 34) selon la direction d'emboîtement (dE).

15. Procédé selon la revendication 14, dans lequel, au cours de l'emboîtement, une pression mécanique comprise entre 10 kg.m.s⁻² et 100 kg.m.s⁻² est appliquée sur chaque partie de raccordement (32, 34) selon la direction d'emboîtement (dE) pour emboîter chaque partie de raccordement (32, 34) sur la borne de connexion (20, 22) associée à cette partie de raccordement (32, 34).

## Revendications modifiées

### Revendications modifiées conformément à la règle 137(2) CBE.

1. Dispositif d'interconnexion (16) d'au moins deux cellules électrochimiques (12, 14) de véhicule électrique, chacune des deux cellules électrochimiques (12, 14) comprenant au moins une borne de connexion (20, 22) électrique comprenant une face supérieure (24) et des bords latéraux de fixation (26), le dispositif d'interconnexion (16) étant configuré pour raccorder entre elles électriquement et mécaniquement lesdites deux bornes de connexion (20, 22) des deux cellules électrochimiques (12, 14),
le dispositif d'interconnexion (16) étant configurable entre une configuration de raccordement dans laquelle il raccorde électriquement et mécaniquement entre elles les deux bornes de connexion (20, 22) des deux cellules électrochimiques (12, 14) et une configuration de repos dans laquelle il est à l'écart des bornes de connexion (20, 22),
le dispositif d'interconnexion (16) comprenant un corps (30) et au moins deux parties de raccordement (32, 34) configurées pour être emboîtées selon une direction d'emboîtement (dE), respectivement, sur l'une des deux bornes de connexion (20, 22) des deux cellules électrochimiques (12, 14), dite « borne de connexion (20, 22) associée », lors du passage de la configuration de repos dans la configuration de raccordement,
le corps (30) présentant au moins une face arrière (30A) destinée à être orientée vers les deux cellules électrochimiques (12, 14) dans la configuration de raccordement,
chacune des deux parties de raccordement (32, 34) comprenant un système de fixation (42) solidaire du corps (30), configuré pour être encliqueté sur les bords latéraux de fixation (26) de la borne de connexion (20, 22) associée lorsque ladite partie de raccordement (32, 34) est emboîtée sur la borne de connexion (20, 22) associée dans la configuration de raccordement,
chacune des deux parties de raccordement (32, 34) comprenant, en outre, une pluralité de lames (40) flexibles électriquement conductrices, chaque lame (40) de la pluralité de lames (40) faisant saillie de la face arrière (30A) du corps (30) et étant configurée pour être agencée en appui selon la direction d'emboîtement (dE) contre au moins une zone d'appui correspondante de la face supérieure (24) de la borne de connexion (20, 22) associée dans la configuration de raccordement de l'organe d'interconnexion (16), chaque pluralité de lames (40) étant distincte de chaque système de fixation (42),
le corps (30) s'étendant dans un plan principal, pour chaque pluralité de lames (40), chaque lame de cette pluralité de lames (40) comprenant une extrémité de liaison (44) reliée à la face arrière (30A) du corps (30) et une extrémité libre (45) opposée à l'extrémité de liaison (44), les extrémités libres (45) de cette pluralité de lames (40) pointant en direction d'un axe central (C) correspondant sensiblement perpendiculaire au plan principal du corps (30),
pour chaque pluralité de lames (40), chaque lame (40) de cette pluralité de lames (40) comprenant une portion plate (46) comprenant l'extrémité libre (45) de cette lame (40) et une portion oblique (47) comprenant l'extrémité de liaison (44) de cette lame (40), la portion plate (46) s'étendant sensiblement parallèlement au plan principal et formant un angle non nul avec la portion oblique (47).

2. Dispositif d'interconnexion selon la revendication 1, dans lequel, pour chaque pluralité de lames (40), chaque lame (40) de cette pluralité de lames (40) est déplaçable entre une position déployée lorsque le dispositif d'interconnexion (16) est dans la configuration de repos et une position rétractée distincte de la position déployée lorsque le dispositif d'interconnexion (16) est dans la configuration de raccordement, chaque lame (40) de cette pluralité de lames (40) étant configurée pour être rétractée vers la face arrière (30A) du corps (30) dans sa position rétractée par rapport à sa position dans la position déployée et, chaque lame (40) de cette pluralité de lames (40) dans la position rétractée étant configurée pour exercer une force de rappel élastique dans la position déployée.

3. Dispositif d'interconnexion selon la revendications 1 ou 2, dans lequel, pour chaque partie de raccordement (32, 34), les lames (40) de la pluralité de lames (40) de cette partie de raccordement (32, 34) sont agencées en couronne.

4. Dispositif d'interconnexion selon l'une quelconque des revendications précédentes, dans lequel, pour chaque partie de raccordement (32, 34), le système de fixation (42) de cette partie de raccordement (32, 34) est configuré pour présenter une configuration neutre lorsque le système d'interconnexion (16) est dans la configuration de repos et une configuration de fixation lorsque le système d'interconnexion (16) est dans la configuration de raccordement, le système de fixation (42) étant configuré pour être encliqueté sur les bords latéraux de fixation (26) de la borne de connexion (20, 22) associée et pour exercer sur la borne de connexion (20, 22) associée des forces sensiblement perpendiculaires à la direction d'emboîtement (dE) et dirigées vers la borne de connexion (20, 22) associée dans la configuration de fixation.

5. Dispositif d'interconnexion selon la revendication 4, dans lequel, pour chaque partie de raccordement (32, 34), le système de fixation (42) de cette partie de raccordement (32, 34) comprend des portions d'encliquetage (51, 52) sur les bords latéraux de fixation (26) de la borne de connexion (20, 22) associée à cette partie de raccordement (32, 34), lesdites portions d'encliquetage (51, 52) étant configurées pour s'éloigner l'une de l'autre selon une direction perpendiculaire à la direction d'emboîtement (dE) lors du passage de la configuration neutre dans la configuration de fixation.

6. Dispositif d'interconnexion selon la revendication 5, dans lequel chaque portion d'encliquetage (51, 52) est une portion recourbée en direction de la face arrière (30A) du corps (30).

7. Dispositif d'interconnexion selon la revendication 5 ou 6, dans lequel, les deux parties de raccordement (32, 34) sont espacées l'une de l'autre selon une direction d'espacement,
pour chaque partie de raccordement (32, 34), le système de fixation (42) de cette partie de raccordement (32, 34) comprenant deux portions d'encliquetage (51, 52), les deux portions d'encliquetage (51, 52) étant agencées de part et d'autre de la pluralité de lames (40) de cette partie de raccordement (32, 34) selon une direction perpendiculaire à la direction d'espacement.

8. Dispositif d'interconnexion selon l'une quelconque des revendications 5 à 7, dans lequel, chaque portion d'encliquetage (51, 52) présente une zone (51C, 52C) configurée pour être logée dans un logement (26L1, 26L2) correspondant aménagé dans les bords latéraux de fixation (26) de la borne de connexion (20, 22) associée, la zone (51C, 52C) de chaque portion d'encliquetage (51, 52) présentant une forme complémentaire de la forme du logement (26L1, 26L2) correspondant.

9. Dispositif d'interconnexion selon l'une quelconque des revendications précédentes, dans lequel le dispositif d'interconnexion (16) comprend, en outre, une partie intermédiaire (36) agencée entre les deux parties de raccordement (32, 34), la partie intermédiaire (36) comprenant un organe d'absorption (60) d'un jeu mécanique, l'organe d'absorption (60) étant configuré pour absorber un jeu mécanique entre les deux parties de raccordement (32, 34) selon la direction d'emboîtement (dE) et/ou selon une direction perpendiculaire à la direction d'emboîtement (dE) dans la configuration de raccordement.

10. Ensemble (10) comprenant :
- au moins deux cellules électrochimiques (12, 14), chacune des deux cellules électrochimiques (12, 14) comprenant au moins une borne de connexion (20, 22) électrique comprenant une face supérieure (24) et des bords latéraux de fixation (26), et
- un dispositif d'interconnexion (16) selon l'une quelconque des revendications précédentes,
l'ensemble (10) étant configurable entre une configuration démontée dans laquelle le dispositif d'interconnexion (16) est dans la configuration de repos et une configuration raccordée dans laquelle le dispositif d'interconnexion (16) est dans la configuration de raccordement,
dans la configuration de raccordement, le dispositif d'interconnexion (16) raccordant électriquement et mécaniquement entre elles les deux bornes de connexion (20, 22) des deux cellules électrochimiques (12, 14), chaque partie de raccordement (32, 34) étant emboîtée sur la borne de connexion (20, 22) associée,
pour chaque partie de raccordement (32, 34), le système de fixation (42) de cette partie de raccordement (32, 34) étant encliqueté sur les bords latéraux de fixation (26) de la borne de connexion (20, 22) associée lorsque cette partie de raccordement (32, 34) est emboîtée sur la borne de connexion (20, 22) associée dans la configuration de raccordement,
dans la position de repos, le dispositif d'interconnexion (16) étant à l'écart des deux cellules électrochimiques.

11. Procédé d'interconnexion d'au moins deux cellules électrochimiques (12, 14) comprenant :
- fournir au moins deux cellules électrochimiques (12, 14), chacune des deux cellules électrochimiques (12, 14) comprenant au moins une borne de connexion (20, 22) électrique comprenant une face supérieure (24) et des bords latéraux de fixation (26),
- fournir un dispositif d'interconnexion (16) selon l'une quelconque des revendications 1 à 9, le dispositif d'interconnexion (16) étant initialement dans la configuration de repos,
- placer le dispositif d'interconnexion (16) dans la configuration de raccordement en emboîtant chaque partie de raccordement (32, 34) du dispositif d'interconnexion (16) sur la borne de connexion (20, 22) associée à cette partie de raccordement (32, 34) selon la direction d'emboîtement (dE).

12. Procédé selon la revendication 11, dans lequel, au cours de l'emboîtement, une pression mécanique comprise entre 10 kg.m.s⁻² et 100 kg.m.s⁻² est appliquée sur chaque partie de raccordement (32, 34) selon la direction d'emboîtement (dE) pour emboîter chaque partie de raccordement (32, 34) sur la borne de connexion (20, 22) associée à cette partie de raccordement (32, 34).
